Europäisches Patentamt

European Patent Office

Office européen des brevets

(19)

(11) **EP 0 986 515 B1**

(12) **FASCICULE DE BREVET EUROPEEN**

(45) Date de publication et mention
de la délivrance du brevet:
**29.09.2004 Bulletin 2004/40**

(21) Numéro de dépôt: **98929475.6**

(22) Date de dépôt: **03.06.1998**

(51) Int Cl.⁷: $C01D\ 7/12$, $C11D\ 3/10$,
$C11D\ 7/12$, $C11D\ 17/00$

(86) Numéro de dépôt international:
**PCT/FR1998/001121**

(87) Numéro de publication internationale:
**WO 1998/055399 (10.12.1998 Gazette 1998/49)**

(54) **PROCEDE DE PREPARATION DE COMPOSITIONS COMPRENANT ESSENTIELLEMENT UN CARBONATE DE METAL ALCALIN ANHYDRE ABSORBANT**

**VERFAHREN ZUR HERSTELLUNG VON ZUSAMMENSETZUNGEN DIE IM WESENTLICHEN EIN WASSERFREIES ABSORBIERENDES ALKALIMETALLCARBONAT ENTHALTEN**

**METHOD FOR PREPARING COMPOSITIONS CONTAINING ESSENTIALLY AN ABSORBENT ANHYDROUS ALKALINE METAL CARBONATE**

(84) Etats contractants désignés:
**AT BE CH DE DK ES FI FR GB GR IE IT LI LU MC NL PT SE**

(30) Priorité: **04.06.1997 FR 9706860**

(43) Date de publication de la demande:
**22.03.2000 Bulletin 2000/12**

(73) Titulaire: **Novacarb**
**92408 Courbevoie Cédex (FR)**

(72) Inventeur: **KIEFER, Jean-Claude**
**Lotissement Le Grand Caillouet**
**F-60460 Précy sur Oise (FR)**

(74) Mandataire: **Jacobson, Claude**
**Cabinet Lavoix**
**2, Place d'Estienne d'Orves**
**75441 Paris Cedex 09 (FR)**

(56) Documents cités:
**DE-A- 3 105 227**      **DE-A- 4 041 321**
**GB-A- 826 388**        **US-A- 5 198 145**
**US-A- 5 325 606**

- **CHEMICAL ABSTRACTS, vol. 81, no. 8, 26 août 1974 Columbus, Ohio, US; abstract no. 39578, XP002056047 & RO 55 600 A (UZINA DE PRODUSE SODICE JUDETUL VILCEA) 28 juin 1973**
- **Encyclopedia of Chemical Technology, 3ème Ed., Vol. 1,1978, pp 866-873**

**Description**

La présente invention a pour objet un procédé de préparation de compositions comprenant essentiellement un carbonate de métal alcalin anhydre absorbant, présentant une porosité engendrant une absorptivité d'au moins 40 % à l'égard de l'agent absorbé.

Parmi les carbonates de métaux alcalins anhydres connus dans l'art antérieur, on peut citer le carbonate de sodium anhydre, qui est habituellement préparé par la calcination de bicarbonate de sodium, de sesquicarbonate de sodium, ou d'un mélange les contenant, à des températures allant de 100°C à 300°C. Le carbonate de sodium anhydre est d'autant plus absorbant qu'il résulte de la calcination du bicarbonate de sodium.

Un procédé de préparation du carbonate de sodium déshydraté à partir de carbonate de sodium décahydrate est décrit dans U.S. 5198145, pouvant être réalisé en une ou deux étapes. Il s'agit principalement d'élimination d'eau de cristallisation dudit carbonate au moyen d'un sécheur à convection du type lit fluidisé.

Le départ de l'eau de cristallisation du carbonate de sodium décahydrate est une opération très délicate. Dans un premier temps, il est impératif de travailler à une température ne dépassant pas 32°C, pour éviter la fusion et/ou l'agglomération des cristaux de décahydrate qui serait susceptible d'entraîner une diminution de l'absorptivité du carbonate de sodium final. Le produit intermédiaire qui contient toujours de l'eau de cristallisation, peut être ensuite soumis à des températures plus élevées, comprises entre 55°C et 82°C.

Le carbonate de sodium final présente une absorptivité élevée, mais contient toujours une quantité non négligeable d'eau résiduelle, de l'ordre de 0,4 mole par mole de carbonate de sodium. En outre, la taille des particules élémentaires est inférieure ou de l'ordre de 10 µm, ce qui rend ce produit relativement difficile à manipuler.

Un autre procédé de mise en oeuvre de carbonate de sodium anhydre, d'après U.S. 5 325 606, consiste à présécher puis à calciner en trois étapes, le bicarbonate de sodium léger, au moyen d'un sécheur à convection, constitué de lits fluidisés en série, et sous une atmosphère contrôlée de $CO_2$ et de vapeur d'eau.

Ce procédé est complexe et coûteux. En effet, d'une part il nécessite la mise en oeuvre de plusieurs étapes de préséchage et de calcination, et d'autre part, la préparation du carbonate doit être réalisée sous une atmosphère contrôlée. Par ailleurs, les conditions opératoires sont telles que l'absorptivité du carbonate de sodium anhydre reste inférieure à 40%.

On a aussi rapporté dans DE 31 05 227, un procédé de décomposition thermique de sels minéraux, tel que le bicarbonate de sodium en carbonate de sodium, au moyen d'un sécheur rotatif et en présence d'un gaz vecteur. Le but recherché dans ce procédé était de décomposer lesdits sels par convection, sans que les produits de décomposition se déposent sur les parois du sécheur. L'utilisation de deux flux de gaz à co-courant et à contre courant, constitue le moyen essentiel de ce procédé et permet d'atteindre ce but. Il est à noter que rien n'est indiqué à propos de l'absorptivité du produit résultant. Cependant les conditions opératoires sont telles que l'absorptivité reste classique, c'est-à-dire inférieure à 40 %.

La présente invention vise à proposer un nouveau procédé permettant d'accéder sur une échelle industrielle, de manière simple et économique, à des compositions comprenant essentiellement un carbonate de métal alcalin anhydre absorbant.

Ce nouveau procédé consiste à effectuer un traitement thermique d'un bicarbonate ammoniacal, à une température comprise entre 80°C et 400°C, sous une atmosphère non confinée, ainsi que précisé selon la revendication 1.

De plus, on n'a pas constaté de dépôt de produits de décomposition, sur les parois de l'appareil dans lequel le procédé selon l'invention est mis en oeuvre.

Un autre objet de la présente invention est constitué par des compositions comprenant essentiellement un carbonate de métal alcalin anhydre absorbant, susceptibles d'être obtenues par le procédé précité, et présentant, en outre, une porosité engendrant une absorptivité d'au moins 40 % à l'égard du Rhodiasurf DB 311®, et une teneur en eau résiduelle d'au plus 0,5 % en poids.

Obtenir une telle absorptivité constitue un résultat tout à fait surprenant. En effet, l'homme du métier ne se serait attendu en aucune façon, à ce que l'absorptivité d'un carbonate anhydre obtenu en mettant en oeuvre l'invention, à savoir, à partir de bicarbonate ammoniacal d'une part, et dans les conditions particulières de température et l'absence de confinement de l'atmosphère d'autre part, atteigne une telle valeur. L'homme du métier se serait tout au plus attendu à avoir une absorptivité classique due au départ d'ammoniac, de dioxyde de carbone et d'eau, c'est-à-dire plutôt de l'ordre de 30 % de porosité à l'égard de l'agent absorbé.

Dans tout ce qui suivra, par composition comprenant essentiellement un carbonate de métal alcalin anhydre absorbant, il faut entendre, une composition comprenant au moins 50 % d'un carbonate de métal alcalin anhydre absorbant. Dans les conditions préférées de mise en oeuvre selon l'invention, ladite composition peut comprendre jusqu'à 95 %, voire 100 %, pondéral d'un carbonate de métal alcalin anhydre absorbant.

Sont considérés comme métal alcalin, tous les éléments appartenant au groupe IA de la classification périodique, notamment le sodium, le potassium, et le césium. Dans le cadre de la présente invention, les métaux alcalins préférés sont le sodium et le potassium, et plus préférentiellement le sodium.

**EP 0 986 515 B1**

Par eau ou humidité résiduelle, on entend l'eau qui ne fait pas partie intégrante de l'édifice. Elle est différente de l'eau de cristallisation ou eau d'hydratation, qui fait partie intégrante de l'édifice.

D'autres caractéristiques, détails et avantages de la présente invention apparaîtront plus clairement à la lecture de la description et de l'exemple qui vont suivre.

Il convient de préciser que le bicarbonate ammoniacal est le produit intermédiaire, obtenu en mettant en oeuvre le procédé de préparation de carbonate de métal alcalin par la technique de l'hydroxyde de métal alcalin à l'ammoniac.

Plus précisément, on appelle bicarbonate ammoniacal aux fins de la présente invention, le produit obtenu après dissolution d'ammoniac gazeux dans une solution aqueuse de chlorure de métal alcalin de manière à produire une saumure ammoniacale. Celle-ci est ensuite carbonatée avec un gaz contenant du dioxyde de carbone pour donner des cristaux de bicarbonate ammoniacal.

Le bicarbonate ammoniacal désigne en fait, une composition comprenant principalement du bicarbonate de métal alcalin, du carbonate de métal alcalin, et dans une moindre mesure, de l'ammoniac sous forme de sels ammonium notamment le bicarbonate, carbonate et/ou carbamate, et de l'eau.

A titre indicatif, cette composition comprend : 70 % à 94,5 % en poids de bicarbonate de métal alcalin ($MHCO_3$), 0 % à 20 % en poids de carbonate de métal alcalin ($M_2CO_3$), 0,2 % à 1 % en poids d'ammoniac exprimé sous forme d'ion ammonium, 0,3 % à 2 % en poids de carbamate d'ammonium ($NH_4OCONH_2$), et 5 % à 20 % en poids d'eau ; la somme de tous les constituants étant égale à 100 %. M représente l'un des métaux alcalins, tels que définis précédemment.

Habituellement cette composition comprend : un bicarbonate ammoniacal désignant un mélange comprenant 92,5 % en poids de bicarbonate de métal alcalin ($MHCO_3$), 2 % en poids de carbonate de métal alcalin ($M_2CO_3$), 0,2 % à 1 % en poids d'ammoniac exprimé sous forme d'ion ammonium, 0,3 % à 2 % en poids de carbamate d'ammonium ($NH_4OCONH_2$), et 5 % à 20 % en poids d'eau ; M représente un métal alcalin ; la somme de tous les constituants égale à 100%.

De préférence, M représente l'un des métaux alcalins précités. Selon un mode de réalisation particulièrement avantageux, on met en oeuvre un bicarbonate ammoniacal pour lequel M représente le sodium.

Une autre caractéristique de l'invention est constituée par le fait que les produits de décomposition du bicarbonate sont entraînés hors de l'appareil dans lequel la décomposition est mise en oeuvre. De cette façon, la décomposition du bicarbonate ammoniacal est favorisée et l'on empêche la recondensation de l'eau sur ce dernier, en minimisant la pression partielle en vapeur d'eau, en dioxyde de carbone, et en ammoniac au dessus du bicarbonate ammoniacal. Pour entraîner les produits de décomposition, on peut, soit faire circuler un flux de gaz dans l'appareil, soit mettre ce dernier sous dépression.

Le traitement thermique, tel qu'il est réalisé dans le cadre de l'invention, ne met en oeuvre qu'une seule étape. En effet, la composition selon l'invention, est préparée, non pas à partir d'un bicarbonate de métal alcalin qui nécessiterait alors d'être d'abord préparé puis isolé, mais simplement à partir de bicarbonate ammoniacal.

Selon un premier mode de réalisation de l'invention, le procédé est réalisé à une pression voisine ou supérieure à la pression atmosphérique. Plus particulièrement, la pression est supérieure à $0,5.10^5$ Pa, et de préférence de l'ordre de $1.10^5$ Pa à $1,5.10^5$ Pa.

Dans ce premier mode de réalisation, le traitement thermique est effectué plus particulièrement à une température comprise entre 100°C et 400°C. La température est plus préférentiellement comprise entre 250°C et 400°C.

Selon ce mode de réalisation, l'entraînement hors de l'appareil est créé par l'introduction d'un flux gazeux. L'alimentation de ce flux gazeux peut être soit à contre courant soit à co-courant, par rapport à l'alimentation du produit. Elle est avantageusement à contre courant.

Le flux gazeux peut être constitué de l'air et/ou de tout autre gaz inerte tel que l'azote et les gaz rares.

Une variante préférée de ce premier mode de réalisation consiste à effectuer le traitement thermique d'un bicarbonate ammoniacal en une seule étape, en présence d'un flux gazeux à contre courant par rapport à l'alimentation du produit, et dans une gamme de température comprise entre 250°C et 400°C.

Selon un second mode de réalisation de l'invention, le traitement thermique est effectué à pression réduite (ou sous une dépression). Selon cette variante, la pression est plus particulièrement comprise entre $0,1.10^5$ Pa et $0,5.10^5$ Pa. Des pressions plus faibles sont envisageables, bien que ne présentant pas d'intérêt supplémentaire.

Selon ce second mode de réalisation de l'invention, la température est plus particulièrement comprise entre 80°C et 120°C, dans les conditions de pression précitées.

A la différence du premier mode de réalisation de l'invention, l'entraînement hors de l'appareil est obtenu ici en créant une depression dans l'appareil. De cette manière, les gaz produits lors de la décomposition du bicarbonate ammoniacal sont entraînés et évacués, sous l'action de cette dépression.

L'évacuation des gaz peut se faire à n'importe quel point du sécheur. Cependant, elle se fait, de préférence, du côté de l'alimentation du bicarbonate ammoniacal, quelle que soit la variante mise en oeuvre.

Une particularité du procédé selon l'invention, qui constitue en même temps un avantage par rapport aux procédés dans l'art antérieur, quelle que soit la variante mise en oeuvre, est la possibilité d'effectuer le séchage et la décomposition en un temps très court et en succession rapide, de faibles quantités de produit. Ainsi, dans ces conditions opératoires, le temps de séjour du produit à l'intérieur de l'appareil est bref.

En général, la quantité de produit mise en jeu est comprise entre 5 % et 10 % de produit immobilisé par rapport au volume de l'appareil dans lequel le traitement thermique a lieu.

Le temps de séjour du produit à l'intérieur de l'appareil peut être très réduit, de l'ordre de quelques secondes à quelques minutes.

Il est à noter que le temps de séjour optimal peut être déterminé de manière classique par l'homme du métier, en tenant compte des conditions de température et de pression auxquelles la décomposition est soumise, de manière à obtenir une élimination totale ou quasi totale de l'eau résiduelle contenue dans le produit, et une porosité engendrant une absorptivité d'au moins 40 % à l'égard du Rhodiasurf DB 311®.

Ainsi, dans le premier mode de réalisation de l'invention, le temps de séjour est plus particulièrement inférieur à 10 minutes, et de préférence compris entre 1 minute et 5 minutes.

Dans le second mode de réalisation de l'invention, le temps de séjour est plus particulièrement inférieur à 2 minutes, et de préférence entre 30 secondes et 1 minute.

L'échange thermique dans le procédé selon l'invention, peut avoir lieu par convection, par conduction, ou par conducto-convection, au moyen de tout type d'appareil connu de l'homme du métier, permettant un tel fonctionnement, et en tenant compte de la pression à laquelle le traitement thermique est effectué.

A titre indicatif, on peut citer des mélangeurs-granulateurs du type Lôdige dont l'échange thermique est principalement par conduction.

En tant que sécheurs fonctionnant par convection, on peut citer sans intention de se limiter, les sécheurs à lit fluidisé ainsi que les atomiseurs dans lesquels on effectue une pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

On notera que l'on peut également mettre en oeuvre l'opération d'atomisation-séchage au moyen d'un réacteur "flash", par exemple du type décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines particules, du mélange initial, et d'autre part le séchage des fines particules obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds. En ce qui concerne le réacteur flash précité, on pourra notamment se référer à la figure 1 de la demande de brevet français 2 431 321. Il est à noter que ce type de séchage est particulièrement approprié dans le cadre du premier mode de réalisation de la présente invention.

On peut aussi mettre en oeuvre le procédé selon l'invention avec un sécheur mixte, c'est-à-dire dont le fonctionnement est à la fois basé sur le chauffage convectif et le chauffage conductif.

On préfère mettre en oeuvre des sécheurs dans lesquels la fraction de séchage par conduction est supérieure à 50 %, de préférence supérieure à 70 %, le complément à 100 % étant constitué par un séchage de type convectif. Selon une variante particulièrement avantageuse de la présente invention, on met en oeuvre un sécheur dans lequel la fraction de séchage par conduction représente au moins 90 %, l'autre fraction étant assurée par un séchage de type convectif.

Il est à noter que le sécheur mixte défini ci-après, convient particulièrement bien à la mise en oeuvre de chacun des deux modes de réalisation de la présente invention.

Selon une variante particulièrement intéressante de la présente invention, on met en oeuvre un sécheur mixte dont le fonctionnement est basé sur la technologie à couche mince turbulente. Ce type de sécheur est en général composé d'un seul corps, dont la longueur est de préférence plus importante que sa section. Pour des raisons évidentes de commodité, le sécheur se présente sous la forme d'un cylindre (ou stator). Bien entendu, toute autre forme géométrique convient à l'invention. De préférence, le sécheur est employé en position horizontale.

L'appareil est bien évidemment muni de moyens de chauffage, comme par exemple, une double enveloppe, dans laquelle peut faire circuler un fluide caloporteur.

En outre, le sécheur peut comprendre un système d'obstacles internes fixes, mobiles, ou encore une combinaison de ce deux types d'obstacles. De préférence, les moyens mobiles d'agitation sont tels qu'ils confèrent au produit à sécher un mouvement hélicoïdal. Ils sont constitués, en général, par un axe tournant (ou rotor), dont la position est confondue avec l'axe du corps du sécheur, et sur lequel sont fixées des pâles ou ailettes. De préférence, les pâles sont placées et conçues de telle sorte que leur mouvement de rotation décrit une forme géométrique très voisine de celle du corps du sécheur, laissant un espace très faible entre la paroi et les pâles. Plus particulièrement, l'espace situé entre les pâles et la paroi interne du sécheur présente une épaisseur comprise entre 0,1 mm et 5 mm.

L'alimentation du produit à sécher se fait à l'une des extrémités du sécheur, de façon perpendiculaire ou parallèle à l'axe du rotor, et de préférence perpendiculaire.

Le produit est introduit dans l'espace situé entre les pâles et la paroi interne du sécheur, de préférence à proximité de celle-ci.

Lorsqu'on effectue le traitement thermique selon l'invention, le point d'alimentation du bicarbonate ammoniacal et celui d'évacuation des gaz produits lors de la décomposition dudit bicarbonate sont situés de préférence du même côté.

La grande vitesse périphérique des parties en rotation, environ 10 m/sec à 35 m/sec, crée alors une très forte turbulence, qui provoque un mélange et un mouvement continus de la masse, à proximité de la paroi du corps du sécheur.

L'échange thermique dans ce type de sécheur a lieu principalement par conduction, au travers de la paroi métallique du stator. Cependant, il reste une fraction du séchage qui a lieu par convection.

Ainsi que cela a été indiqué auparavant, dans le cadre du premier mode de réalisation de l'invention, le sécheur fonctionne de préférence, en présence d'un flux de gaz, à contre courant de l'alimentation du produit à traiter.

L'avantage d'utiliser un sécheur de ce type, fonctionnant principalement en mode de séchage conductif, avec un flux de gaz à contre courant de l'alimentation du produit à traiter, est que les forces motrices créées pour la diffusion du flux gazeux sont plus élevées qu'avec un flux à co-courant, limitant la vitesse d'évacuation de produit traité thermiquement. Ainsi, le temps de séjour du bicarbonate ammoniacal dans l'appareil est légèrement plus important qu'en fonctionnement à co-courant. Par conséquent, on peut obtenir des compositions comprenant essentiellement du carbonate de métal alcalin essentiellement sans poussières et totalement anhydre, c'est-à-dire exempt d'eau de cristallisation et d'eau résiduelle.

Le traitement a lieu de manière avantageuse, en continu. Cependant, on ne sortira pas du cadre de l'invention en effectuant ledit traitement en discontinu.

Contrairement à ce qui était attendu, le traitement du bicarbonate ammoniacal effectué dans les conditions de la présente invention, permet non seulement de sécher et de décomposer sélectivement le bicarbonate de métal alcalin et les sels d'ammonium présents, notamment le bicarbonate, le carbonate et/ou le carbamate en ammoniac, eau, et dioxyde de carbone, mais surtout d'obtenir un carbonate de métal alcalin anhydre présentant une porosité engendrant une absorptivité d'au moins 40 % à l'égard du Rhodiasurf DB 311®. Le Rhodiasurf DB 311®, qui est un produit commercialisé par la société Rhône-Poulenc, est un tensioactif non-ionique sous forme d'un alcool gras éthoxylé. Cet alcool gras se présente sous la forme d'un liquide incolore à jaune faible, miscible en toutes proportions avec l'eau. Il présente une masse volumique d'environ 975 kg/m$^3$ et un pH compris entre 5 à 8 (solution aqueuse à 10 g / 100 ml).

Le procédé selon l'invention est avantageusement mis en oeuvre pour la fabrication du carbonate de sodium anhydre absorbant.

Un autre objet de l'invention est relatif aux compositions comprenant essentiellement du carbonate de métal alcalin anhydre absorbant susceptibles d'être obtenus par le procédé explicité auparavant. Ces compositions comprennent au moins 50 % pondéral de carbonate de métal alcalin anhydre absorbant, et dans les conditions préférées de mise en oeuvre de l'invention, ladite composition peut comprendre 95 %, voire 100 % pondéral de carbonate métal alcalin anhydre absorbant.

Le carbonate de métal alcalin est donc sous forme anhydre, c'est-à-dire exempt d'eau de cristallisation et d'eau résiduelle.

Les compositions comprennent essentiellement du carbonate de métal alcalin anhydre absorbant dont la porosité engendre une absorptivité d'au moins 40 % à l'égard du Rhodiasurf DB 311®. Elle peut atteindre une absorptivité de 50% de porosité.

Dans le cas de la présente invention, il est précisé que l'absorptivité, à diamètre de pore équivalent, est liée au volume poreux intraparticulaire (porosité interne du grain) et non pas au volume poreux total qui assiocie le volume poreux intraparticulaire et le volume interparticulaire.

Une autre caractéristique des compositions selon l'invention est qu'elles présentent une teneur en eau résiduelle d'au plus 0,5 % en poids. De préférence, la teneur en eau résiduelle est comprise entre 0 % et 0,5 % en poids. Selon une variante particulièrement avantageuse de la présente invention, les compositions de carbonate de métal alcalin sont exemptes d'eau résiduelle.

Une composition préférée de l'invention est une composition comprenant essentiellement du carbonate de métal alcalin anhydre absorbant présentant une porosité engendrant une absorptivité d'au moins 40 % à l'égard du Rhodiasurf DB 311®, et une teneur en eau résiduelle ou une humidité d'au plus 0,5 % en poids.

Lesdites compositions comprennent essentiellement du carbonate de métal alcalin anhydre absorbant de faible densité non tassée, variant entre $400 \pm 50$ kg/m$^3$ et $700 \pm 50$ kg/m$^3$, et avantageusement, une densité non tassée de l'ordre de 650 kg/m$^3$.

Les compositions selon l'invention, comprennent essentiellement un carbonate de métal alcalin anhydre absorbant, possédant une suface spécifique BET comprise entre 1,6 m$^2$/g à 2,4 m$^2$/g, et de préférence entre 1,8 m$^2$/g et 2,2 m$^2$/g.

La surface spécifique est déterminée selon la méthode de BRUNAUER - EMMET - TELLER décrite dans le *Journal of the American Chemical Society, Vol. 60, page 309, 1938,* et correspondant à la norme NFT 45007 (novembre 1987).

Lesdites compositions présentent, en outre, une taille de particules exprimée par le diamètre moyen ($d_{50}$), compris entre 30 et 80 microns. On définit le diamètre moyen ($d_{50}$) comme étant tel que 50 % en poids des particules ont un diamètre supérieur au diamètre moyen.

Une autre composition intéressante selon l'invention est une composition comprenant essentiellement du carbonate de métal alcalin présentant une porosité engendrant une absorptivité d'au moins 40 % à l'égard du Rhodiasurf DB 311®, et un diamètre moyen ($d_{50}$) des particules compris entre 30 et 80 microns.

Sont également intéressants, les compositions ayant une teneur en eau résiduelle ou une humidité d'au plus 0,5 % en poids, et un diamètre moyen ($d_{50}$) des particules compris entre 30 et 80 microns.

Selon une variante particulièrement avantageuse, les compositions comprennent essentiellement du carbonate de métal alcalin anhydre absorbant présentant une porosité engendrant une absorptivité d'au moins 40 % à l'égard du Rhodiasurf DB 311®, une teneur en eau résiduelle ou une humidité d'au plus 0,5 % en poids, et un diamètre moyen ($d_{50}$) des particules compris entre 30 et 80 microns.

Lorsque le carbonate de métal alcalin anhydre absorbant est le carbonate de sodium anhydre absorbant, la composition le comprenant essentiellement, présente un intérêt particulier.

Du fait de sa grande absorptivité, la composition comprenant essentiellement du carbonate de métal alcalin anhydre selon l'invention, convient comme support absorbant, pouvant véhiculer tout produit ne solubilisant pas ledit support, seul ou en mélange avec d'autres additifs tels que des liants, des stabilisants. Ce type de support peut être utilisé, notamment dans des formulations détergentes concentrées, pour l'absorption des composés tensioactifs.

La composition comprenant essentiellement du carbonate de métal alcalin anhydre absorbant, peut éventuellement être employée dans le traitement de gaz ou de fumées acides.

Un exemple concret mais non limitatif illustrant l'invention va maintenant être présenté.

**EXEMPLE**

**1. Préparation de carbonate de sodium anhydre absorbant**

L'appareil utilisé pour le traitement thermique du bicarbonate ammoniacal, qu'il soit effectué à pression atmosphérique ou à pression réduite, est constitué principalement d'un cylindre ou stator, muni d'une double enveloppe dans laquelle circule un fluide caloporteur dont la température peut être régulée, de 25°C à 400°C. Ce stator est traversé axialement par un arbre (ou rotor), muni d'ailettes. La vitesse de rotation du rotor est de 100 à 3500 tr/min.

Le produit est introduit par une extrémité située en amont des ailettes. L'alimentaion est effectuée perpendiculairement à l'axe du rotor, dans l'espace se trouvant entre les ailettes et la paroi interne du stator, et à proximité de celle-ci. En opérant ainsi, le produit prend un mouvement hélicoidal dès son introduction, à la périphérie du stator et des ailettes.

Un débit de gaz à contre courant est imposé de manière à entraîner et à extraire les produits gazeux provenant de la décomposition du bicarbonate ammoniacal.

Les conditions opératoires sont les suivantes, lorsque l'on opère à pression atmosphérique :

- débit d'alimentaion : 300 g/min.,
- température d'alimentation : 25°C,
- vitesse de rotation : 2400 tr/min.,
- température de la double enveloppe : 294°C,
- débit de sortie de produit sec : 150 g/min.,
- température de produit en sortie : 90°C - 100°C,
- débit d'air à contre courant : 2 Nm$^3$/h,
- teneur d'eau résiduelle ou humidité du produit en sortie : 0,
- temps de séjour dans l'appareil : 90 sec.

On obtient un produit blanc, correspondant à une composition comprenant 100 % pondéral de carbonate de sodium présentant les caractéristiques suivantes :

- $(d_{50})$ = 47 microns,
- densité non tassée = 650 kg/m$^3$,
- surface spécifique BET = 1,8 m$^2$/g.

## 2. Test d'absorptivité

Mode opératoire :

Pour réaliser ce test, on utilise le Rhodiasurf DB 311®.

On pèse dans un bécher 25 grammes de produit à tester, sous forme de poudre ou de grains.

A l'aide d'une pipette, on ajoute 0,5 gramme de composé tensioactif DB 311®.

Au moyen d'une spatule, on mélange jusqu'à disparition des agglomérats formés par le tensioactif.

On ajoute autant de tensioactif qu'il est nécessaire, 0,5 gramme par 0,5 gramme, pour atteindre la saturation de la poudre ou des grains à tester.

On considère que le test est terminé, lorsqu'il y a collage du produit humide sur la spatule quand on la tourne, et sur les parois du bécher.

L'absorptivité est calculée de la façon suivante :

% absorptivité = Masse de tensioactif ajouté en grammes X 4 (pour 25 grammes de

produit à tester).

Le produit selon l'invention, presente une porosité telle qu'elle engendre une absorptivité de 44 % à l'égard du Rhodiasurf DB 311®.

## Revendications

**1.** Procédé de préparation d'une composition comprenant essentiellement du carbonate de métal alcalin anhydre absorbant, **caractérisé en ce que** l'on effectue un traitement thermique en une étape, d'un bicarbonate ammoniacal, à une température comprise entre 80°C et 400°C, en entraînant les produits de décomposition du bicarbonate hors de l'appareil dans lequel la décomposition est mise en oeuvre, cet entraînement des produits de décomposition hors de l'appareil étant réalisé:

- en faisant circuler un flux de gaz dans l'appareil; ou
- en mettant l'appareil sous une dépression entraînant et évacuant les gaz produits lors de la décomposition du bicarbonate ammoniacal.

**2.** Procédé selon la revendication précédente, **caractérisé en ce que** l'on effectue un traitement thermique d'un carbonate ammoniacal désignant un mélange comprenant 70 % à 94,5 % en poids de bicarbonate de métal alcalin (MHCO$_3$), 0 % à 20 % en poids de carbonate de métal alcalin (M$_2$CO$_3$), 0,2 % à 1 % en poids d'ammoniac exprimé sous forme d'ion ammonium, 0,3 % à 2 % en poids de carbamate d'ammonium (NH$_4$OCONH$_2$), et 5 % à 20 % en poids d'eau ; M représente un métal alcalin ; la somme de tous les constituants égale à 100%.

**3.** Procédé selon la revendication 2, **caractérisé en ce que** l'on effectue un traitement thermique d'un carbonate ammoniacal désignant un mélange comprenant 92,5 % en poids de bicarbonate de métal alcalin (MHCO$_3$), 2 % en poids de carbonate de métal alcalin (M$_2$CO$_3$), 0,2 % à 1 % en poids d'ammoniac exprimé sous forme d'ion ammonium, 0,3 % à 2 % en poids de carbamate d'ammonium (NH$_4$OCONH$_2$), et 5 % à 20 % en poids d'eau ; M représente un métal alcalin ; la somme de tous les constituants égale à 100%.

**4.** Procédé selon les revendications 2 ou 3, **caractérisé en ce que** M représente le sodium.

**5.** Procédé selon l'une quelconque des revendications précédentes, **caractérisé en ce que** le traitement thermique est effectué à une pression voisine ou supérieure à la pression atmosphérique, supérieure à 0,5.10$^5$ Pa, de préférence comprise entre 1.10$^5$ Pa à 1,5.10$^5$ Pa.

**6.** Procédé selon la revendication 5, **caractérisé en ce que** le traitement thermique est effectué à une température comprise entre 250°C et 400°C.

**7.** Procédé selon l'une des revendications 5 ou 6, **caractérisé en ce que** l'entraînement des produits de décomposition du bicarbonate hors de l'appareil dans lequel la décomposition est mise en oeuvre est réalisé en faisant circuler un flux de gaz dans l'appareil dans lequel la décomposition est mise en oeuvre.

**8.** Procédé selon la revendication précédente, **caractérisé en ce que** l'entraînement des produits de décomposition est réalisé par l'introduction d'un flux gazeux à contre courant par rapport à l'alimentation du produit.

**9.** Procédé selon l'une quelconque des revendications 7 ou 8, **caractérisé en ce que** le flux gazeux est constitué d'air et/ou de tout autre gaz inerte tel que l'azote et les gaz rares.

**10.** Procédé selon l'une des revendications 5 à 9, **caractérisé en ce que** le temps de séjour est inférieur à 10 minutes, et de préférence compris entre 1 minute et 5 minutes.

**11.** Procédé selon l'une quelconque des revendications 1 à 4, **caractérisé en ce que** le traitement thermique est effectué sous une dépression comprise entre $0,1.10^5$ Pa et $0,5.10^5$ Pa.

**12.** Procédé selon la revendication 11, **caractérisé en ce que** le traitement thermique est effectué à une température comprise entre 80°C et 120°C.

**13.** Procédé selon l'une des revendications 11 ou 12, **caractérisé en ce que** l'entraînement des produits de décomposition hors de l'appareil dans lequel la décomposition est mise en oeuvre est obtenu en créant une dépression entraînant et évacuant les gaz produits lors de la décomposition du bicarbonate ammoniacal.

**14.** Procédé selon l'une des revendications 11 à 13, **caractérisé en ce que** le temps de séjour est inférieur à 2 minute, et de préférence entre 30 secondes et 1 minute.

**15.** Procédé selon l'une quelconque des revendications précédentes, **caractérisé en ce que** le traitement thermique est effectué en continu.

**16.** Procédé selon l'une quelconque des revendications précédentes, **caractérisé en ce que** l'on effectue le traitement thermique dans un sécheur mixte, dont le fonctionnement est à la fois basé sur le chauffage conductif et le chauffage convectif.

**17.** Procédé selon l'une quelconque des revendications précédentes, **caractérisé en ce que** l'on effectue le traitement thermique dans un sécheur mixte dans lequel la fraction de séchage par conduction est supérieure à 50 %, de préférence supérieure à 70 %, le complément à 100 % étant constitué par un séchage de type convectif.

**18.** Procédé selon l'une quelconque des revendications précédentes, **caractérisé en ce que** l'on effectue le traitement thermique dans un sécheur mixte dont le fonctionnement est basé sur la technologie à couche mince turbulente.

**19.** Composition comprenant essentiellement du carbonate de métal alcalin anhydre absorbant **caractérisée en ce qu'**elle est susceptible d'être obtenue selon l'une quelconque des revendications précédentes, et **en ce qu'**elle présente une teneur en eau résiduelle ou une humidité d'au plus 0,5 % en poids, une porosité engendrant une absorptivité d'au moins 40 % à l'égard du RHODIASURF DB 311®, et un diamètre moyen ($d_{50}$) des particules compris entre 30 et 80 microns.

**20.** Composition selon la revendication 19, **caractérisée en ce que** le carbonate de métal alcalin anhydre absorbant présente une densité non tassée variant entre $400 \pm 50$ kg/m³ et $700 \pm 50$ kg/m³.

**21.** Composition selon l'une quelconque des revendications 19 ou 20, **caractérisée en ce que** le carbonate de métal alcalin anhydre absorbant présente une surface spécifique BET comprise entre 1,6 m²/g à 2,4 m²/g.

**22.** Composition selon l'une quelconque des revendications 19 à 21, **caractérisée en ce qu'**elle comprend au moins 95 % pondéral, et de préférence 100 % en poids de carbonate de métal alcalin.

**23.** Utilisation d'une composition comprenant essentiellement un carbonate de métal alcalin anhydre absorbant selon l'une des revendications 19 à 23, ou susceptible d'être obtenu selon l'une quelconque des revendications 1 à 18, comme support absorbant véhiculant tout produit ne solubilisant pas ledit support, seul ou en mélange avec d'autres additifs tels que des liants et des stabilisants, notamment dans les formulations détergentes concentrées pour l'absorption des composés tensioactifs, et dans les traitements de gaz ou de fumées acides.

**Patentansprüche**

**1.** Verfahren zur Herstellung einer Zusammensetzung, die im wesentlichen wasserfreies, absorbierendes Alkalimetallcarbonat umfasst, **dadurch gekennzeichnet, dass** man eine thermische Behandlung eines ammoniakalischen Bicarbonats bei einer Temperatur zwischen 80°C und 400°C in einer Stufe durchführt, wobei die Zersetzungsprodukte des Bicarbonats aus der Apparatur, in der die Zersetzung durchgeführt wird, abgeführt werden, wobei diese Abführung der Zersetzungsprodukte aus der Apparatur realisiert wird:

- durch Zirkulierenlassen eines Gasstroms in der Apparatur; oder
- durch Verwendung der Apparatur unter Unterdruck, wodurch die Gasprodukte infolge der Zersetzung des ammoniakalischen Bicarbonats abgeführt und evakuiert werden.

**2.** Verfahren nach einem vorangehenden Anspruch, **dadurch gekennzeichnet, dass** man eine thermische Behandlung eines ammoniakalischen Carbonats, wobei dieser Ausdruck ein Gemisch bezeichnet, das 70 Gew.-% bis 94,5 Gew.-% Alkalimetallbicarbonat ($MHCO_3$), 0 Gew.-% bis 20 Gew.-% Alkalimetallcarbonat ($M_2CO_3)_4$, 0,2 Gew.-% bis 1 Gew.-% Ammoniak, ausgedrückt als Ammoniumion, 0,3 Gew.-% bis 2 Gew.-% Ammoniumcarbamat ($NH_4OCONH_2$) und 5 Gew.-% bis 20 Gew.-% Wasser umfasst, wobei M ein Alkalimetall darstellt, die Summe aller Bestandteile 100 % ist, durchführt.

**3.** Verfahren nach Anspruch 2, **dadurch gekennzeichnet, dass** man eine thermische Behandlung eines ammoniakalischen Carbonats, wobei dieser Ausdruck ein Gemisch bezeichnet, das 92,% Gew.-% Alkalimetallbicarbonat ($MHCO_3$), 2 Gew.-% Alkalimetallcarbonat ($M_2CO_3$), 0,2 Gew.-% bis 1 Gew.-% Ammoniak, ausgedrückt als Ammoniumion, 0,3 Gew.-% bis 2 Gew.-% Ammoniumcarbamat ($NH_4OCONH_2$) und 5 Gew.-% bis 20 Gew.-% Wasser umfasst, wobei M ein Alkalimetall darstellt, die Summe aller Bestandteile 100 % ist, durchführt.

**4.** Verfahren nach Anspruch 2 oder 3, **dadurch gekennzeichnet, dass** M Natrium darstellt.

**5.** Verfahren nach einem der vorangehenden Ansprüche, **dadurch gekennzeichnet, dass** die thermische Behandlung bei einem Druck von etwa Atmosphärendruck oder darüber, von über $0{,}5 \cdot 10^5$ Pa, vorzugsweise bei einem Druck zwischen $1 \cdot 10^5$ Pa und $1{,}5 \cdot 10^5$ Pa, durchgeführt wird.

**6.** Verfahren nach Anspruch 5, **dadurch gekennzeichnet, dass** die thermische Behandlung bei einer Temperatur zwischen 250°C und 400°C durchgeführt wird.

**7.** Verfahren nach Anspruch 5 oder Anspruch 6, **dadurch gekennzeichnet, dass** die Abführung der Zersetzungsprodukte des Bicarbonats aus der Apparatur, in der die Zersetzung durchgeführt wird, durch Zirkulierenlassen eines Gasstroms in der Apparatur, in der die Zersetzung durchgeführt wird, realisiert wird.

**8.** Verfahren nach dem vorangehenden Anspruch, **dadurch gekennzeichnet, dass** das Abführen der Zersetzungsprodukte durch Einleiten eines Gasstroms im Gegenstrom bezüglich der Beschickung des Produktes realisiert wird.

**9.** Verfahren nach Anspruch 7 oder 8, **dadurch gekennzeichnet, dass** der Gasstrom aus Luft und/oder jedem anderen inerten Gas, wie z.B. Stickstoff und die Edelgase, besteht.

**10.** Verfahren nach einem der Ansprüche 5 bis 9, **dadurch gekennzeichnet, dass** die Verweilzeit unter 10 min liegt und vorzugsweise zwischen 1 min und 5 min liegt.

**11.** Verfahren nach einem der Ansprüche 1 bis 4, **dadurch gekennzeichnet, dass** die thermische Behandlung unter einem Unterdruck zwischen $0{,}1 \cdot 10^5$ Pa und $0{,}5 \cdot 10^5$ Pa durchgeführt wird.

**12.** Verfahren nach Anspruch 11, **dadurch gekennzeichnet, dass** die thermische Behandlung bei einer Temperatur zwischen 80°C und 120°C durchgeführt wird.

13. Verfahren nach Anspruch 11 oder 12, **dadurch gekennzeichnet, dass** die Abführung der Zersetzungsprodukte aus der Apparatur, in die Zersetzung durchgeführt wird, erreicht wird, indem ein Unterdruck erzeugt wird, der die Gasprodukte infolge der Zersetzung des ammoniakalischen Biocarbonats abführt und evakuiert.

14. Verfahren nach einem der Ansprüche 11 bis 13, **dadurch gekennzeichnet, dass** die Verweilzeit unter 2 min und vorzugsweise zwischen 30 s und 1 min liegt.

15. Verfahren nach einem der vorangehenden Ansprüche, **dadurch gekennzeichnet, dass** die thermische Behandlung kontinuierlich durchgeführt wird.

16. Verfahren nach einem der vorangehenden Ansprüche, **dadurch gekennzeichnet, dass** man die thermische Behandlung in einem Mischtrockner durchführt, dessen Wirkungsweise gleichzeitig auf Konduktionserwärmung und Konduktionserwärmung basiert.

17. Verfahren nach einem der vorangehenden Ansprüche, **dadurch gekennzeichnet, dass** man die thermische Behandlung in einem Mischtrockner durchführt, in dem die Trocknungsfraktion durch Konduktion über 50 %, vorzugsweise über 70 % liegt, wobei der Rest bis 100 % durch Trocknung des Konvektionstyps gebildet wird.

18. Verfahren nach einem der vorangehenden Ansprüche, **dadurch gekennzeichnet, dass** man die thermische Behandlung in einem Mischtrockner durchführt, dessen Wirkungsweise auf der Technologie mit dünner Wirbelschicht basiert.

19. Zusammensetzung, die im wesentlichen wasserfreies absorbierendes Alkalimetallcarbonat umfasst, **dadurch gekennzeichnet, dass** sie nach einem der vorangehenden Ansprüche erhalten werden kann, dass sie einen Gehalt an Restwasser oder eine Feuchtigkeit von höchstens 0,5 Gew.-% hat, eine Porosität aufweist, die ein Absorptionsvermögen von mindestens 40 % bezüglich Rhodiasurf DB BM® erzeugt, und einen mittleren Durchmesser ($d_{50}$) der Partikel zwischen 30 und 80 µm aufweist.

20. Zusammensetzung nach Anspruch 19, **dadurch gekennzeichnet, dass** das wasserfreie absorbierende Alkalimetallcarbonat eine nicht-gepackte Dichte hat, die zwischen $400 \pm 50$ kg/m$^3$ und $700 \pm 50$ kg/m$^3$ variiert.

21. Zusammensetzung nach Anspruch 19 oder 20, **dadurch gekennzeichnet, dass** das wasserfreie absorbierende Alkalimetallcarbonat eine spezifische Oberfläche nach BET aufweist, die zwischen 1,6 m$^2$/g und 2,4 m$^2$/g liegt.

22. Zusammensetzung nach einem der Ansprüche 19 bis 21, **dadurch gekennzeichnet, dass** sie mindestens 95 Gew.-% und vorzugsweise 100 Gew.-% Alkalimetallcarbonat umfasst.

23. Verwendung einer Zusammensetzung, die im wesentlichen wasserfreies absorbierendes Alkalimetallcarbonat nach einem der Ansprüche 19 bis 23 umfasst oder nach einem der Ansprüche 1 bis 18 erhältlich ist, als absorbierender Träger, der jedes Produkt, das den Träger nicht solubilisiert, allein oder im Gemisch mit anderen Additiven wie Bindemitteln und Stabilisatoren, trägt, insbesondere in konzentrierten Detergensformulierungen zur Absorption der grenzflächenaktiven Verbindungen und in Behandlungen von Gas und saurem Rauch.

**Claims**

1. Method of preparing a composition principally containing absorbent anhydrous alkaline metal carbonate, **characterised in that** a thermal treatment is conducted on an ammoniacal bicarbonate in one step at a temperature in the range of between 80°C and 400°C, carrying the decomposition products of the bicarbonate out of the apparatus, in which the decomposition has occurred, and the decomposition products are carried out of the apparatus:

   • by circulating a gas flux in the apparatus; or
   • by putting the apparatus under a low pressure to carry and evacuate the gases produced during decomposition of the ammoniacal bicarbonate.

2. Method according to the preceding claim, **characterised in that** a thermal treatment is conducted on an ammoniacal carbonate representing a mixture containing 70% to 94.5% by weight of alkaline metal bicarbonate ($MHCO_3$), 0% to 20% by weight of alkaline metal carbonate ($M_2CO_3$), 0.2% to 1% by weight of ammonia present in the form of ammonium ion, 0.3% to 2% by weight of ammonium carbamate ($NH_4OCONH_2$) and 5% to 20% by weight of water; M representing an alkaline metal; the sum of all the constituents equalling 100%.

3. Method according to Claim 2, **characterised in that** a thermal treatment is conducted on an ammoniacal carbonate representing a mixture containing 92.5% by weight of alkaline metal bicarbonate ($MHCO_3$), 2% by weight of alkaline metal carbonate ($M_2CO_3$), 0.2% to 1% by weight of ammonia present in the form of ammonium ion, 0.3% to 2% by weight of ammonium carbamate ($NH_4OCONH_2$) and 5% to 20% by weight of water; M representing an alkaline metal; the sum of all the constituents equalling 100%.

4. Method according to Claims 2 or 3, **characterised in that** M represents sodium.

5. Method according to any one of the preceding claims, **characterised in that** the thermal treatment is conducted at a pressure close to or higher than atmospheric pressure, higher than $0.5.10^5$ Pa, preferably in the range of $1.10^5$ Pa to $1.5.10^5$ Pa.

6. Method according to Claim 5, **characterised in that** the thermal treatment is conducted at a temperature in the range of between 250°C and 400°C.

7. Method according to one of Claims 5 or 6, **characterised in that** the decomposition products of the bicarbonate are carried out of the apparatus, in which the decomposition has occurred, by circulating a gas flux in the apparatus, in which the decomposition has occurred.

8. Method according to the preceding claim, **characterised in that** the decomposition products are carried out of said apparatus by introducing a gaseous flux in counterflow in relation to the supply of the product.

9. Method according to any one of Claims 7 or 8, **characterised in that** the gaseous flux is formed from air and/or any other inert gas such as nitrogen and rare gases.

10. Method according to one of Claims 5 to 9, **characterised in that** the retention time is less than 10 minutes, and preferably in the range of between 1 minute and 5 minutes.

11. Method according to any one of Claims I to 4, **characterised in that** the thermal treatment is conducted under a low pressure in the range of between $0.1.10^5$ Pa and $0.5.10^5$ Pa.

12. Method according to Claim 11, **characterised in that** the thermal treatment is conducted at a temperature in the range of between 80°C and 120°C.

13. Method according to one of Claims 11 or 12, **characterised in that** the decomposition products are carried out of the apparatus, in which the decomposition has occurred, by creating a low pressure to carry and evacuate the gases produced during decomposition of the ammoniacal bicarbonate.

14. Method according to one of Claims 11 to 13, **characterised in that** the retention time is less than 2 minutes and preferably between 30 seconds and 1 minute.

15. Method according to any one of the preceding claims, **characterised in that** the thermal treatment is conducted continuously.

16. Method according to any one of the preceding claims, **characterised in that** the thermal treatment is conducted in a combined dryer, the operation of which is based on both conductive heating and convective heating.

17. Method according to any one of the preceding claims, **characterised in that** the thermal treatment is conducted in a combined dryer, in which the proportion of drying by conduction is greater than 50%, preferably greater than 70%, the remainder to 100% being formed by a convective type of heating.

18. Method according to any one of the preceding claims, **characterised in that** the thermal treatment is conducted in a combined dryer, the operation of which is based on thin-film evaporation technology.

19. Composition principally containing absorbent anhydrous alkaline metal carbonate, **characterised in that** it is capable of being obtained according to any one of the preceding claims, and **in that** it has a residual water content or a moisture content of 0.5% by weight at most, a porosity resulting in an absorbency of at least 40% with respect to Rhodiasurf DB 311® and an average diameter ($d_{50}$) of particles in the range of between 30 and 80 microns.

20. Composition according to Claim 19, **characterised in that** the absorbent anhydrous alkaline metal carbonate has an untamped density varying between $400 \pm 50$ kg/m$^3$ and $700 \pm 50$ kg/m$^3$.

21. Composition according to Claim 19, **characterised in that** the absorbent anhydrous alkaline metal carbonate has a B.E.T. surface area in the range of between 1.6 m$^2$/g to 2.4 m$^2$/g.

22. Composition according to any one of Claims 19 to 21, **characterised in that** it contains at least 95% by weight, and preferably 100% by weight, of alkaline metal carbonate.

23. Use of a composition principally containing absorbent anhydrous alkaline metal carbonate according to one of Claims 19 to 23, or capable of being obtained according to any one of Claims 1 to 18, as an absorbent support carrying any product which is not soluble in said support, either alone or in a mixture with other additives such as binders and stabilisers, in particular in concentrated detergent formulations for the absorption of surfactant compounds, and in gas or acid fume treatments.